# FASCICULE DE BREVET EUROPEEN

(11) **EP 1 727 691 B1**
(45) Date de publication et mention de la délivrance du brevet: **19.12.2007**
(21) Numéro de dépôt: 05728288.1
(22) Date de dépôt: 10.02.2005
(51) Int. Cl.: B60G 21/05, B60G 21/055

(54) **ESSIEU SOUPLE DE VEHICULE AUTOMOBILE A DEUX BARRES ANTI-DEVERS ET PROCEDE D'ASSEMBLAGE CORRESPONDANT**
FLEXIBLE KRAFTFAHRZEUGACHSE MIT ZWEI STABILISATOREN UND ENTSPRECHENDEM MONTAGEVERFAHREN
MOTOR VEHICLE FLEXIBLE AXLE HAVING TWO STABILIZER BARS AND A CORRESPONDING ASSEMBLING METHOD

(30) Priorité: 15.03.2004 FR 0402647
(43) Date de publication de la demande: 06.12.2006
(73) Titulaire: Renault SAS, 92100 Boulogne Billancourt (FR)
(72) Inventeur: ROLLET, Rémi, F-91190 Gif (FR)
(74) Mandataire: Guyon, Rodolphe C.
(86) Numéro de dépôt international: PCT/FR2005/050085
(87) Numéro de publication internationale: WO 2005/092647

(56) Documents cités:
- DE-A- 3 521 361
- DE-A- 19 631 975
- FR-A- 1 320 822
- FR-A- 2 486 461
- FR-A- 2 761 301
- US-A- 4 234 205
- US-A- 4 625 995

## Description

L'invention concerne un essieu souple pour véhicule automobile pourvu de deux barres anti-dévers et un procédé d'assemblage des deux barres.

Un essieu souple de véhicule comporte généralement deux bras oscillants longitudinaux qui supportent chacun une roue à une de leurs extrémités, et qui sont articulés à leur autre extrémité sur la carrosserie du véhicule. Ces bras sont reliés par une traverse rigide en flexion et souple en torsion. Parallèlement à la traverse, une barre transversale anti-dévers élastiquement déformable en torsion est rigidement reliée par ses extrémités aux deux bras.

Un tel essieu souple est décrit dans le document DE 3 521 361.

La capacité anti-roulis de ces essieux souples commence toutefois à être limitée. En effet, une raideur élevée entre les bras oscillants est difficile à obtenir en raison des contraintes élevées s'exerçant au niveau des soudures de fixation de la barre anti-dévers aux bras. De telles contraintes peuvent en effet conduire à la rupture des soudures.

La fixation d'une deuxième barre anti-dévers (Voir par exemple documents DE19631975, US 4 625 995) sur les bras oscillants permettrait d'atteindre une raideur plus élevée de l'essieu en répartissant les contraintes exercées sur les soudures entre les barres. Toutefois, la barre anti-dévers de l'essieu est fixée sur chaque bras oscillant entre l'articulation du bras à la caisse et le support de roue. Cette distance, généralement faible afin de limiter l'encombrement de l'essieu, est insuffisante pour fixer une deuxième barre anti-dévers parallèlement à la première sur les bras. La fixation est en effet réalisée par soudage effectué par un automate, et les dimensions de l'essieu ne permettent pas le passage de l'automate pour fixer une deuxième barre.

L'invention vise à pallier ces inconvénients en proposant un essieu souple présentant une capacité anti-roulis améliorée, sans augmenter l'encombrement de l'essieu, et dont la fabrication peut être automatisée.

A cet effet, un premier objet de l'invention concerne un essieu souple pour véhicule automobile comprenant deux bras oscillants longitudinaux articulés chacun à un support de roue et dont une extrémité est articulée à la carrosserie du véhicule, dans lequel chaque bras oscillant présente une face intérieure faisant face à l'autre bras oscillant et une face extérieure opposée dirigée vers l'extérieur du véhicule, caractérisé en ce qu'il est pourvu de deux barres anti-dévers s'étendant sensiblement perpendiculairement aux deux bras oscillants et les reliant, et en ce que la face intérieure de chaque bras oscillant est fixée à l'extrémité de l'une des barres tandis que sa face extérieure est fixée à l'extrémité de l'autre barre, chaque bras étant pourvu d'un orifice traversant afin de permettre le passage de la barre dont l'extrémité doit être fixée sur sa face extérieure.

Une telle fixation des deux barres anti-dévers permet de les fixer à une faible distance l'une de l'autre, de sorte qu'il n'est pas nécessaire d'augmenter la longueur des bras oscillants. Ces deux barres anti-dévers parallèles permettent d'améliorer la capacité anti-roulis de l'essieu.

Dans un premier mode de réalisation, les extrémités d'une même barre anti-dévers sont fixées sur les faces intérieures des bras oscillants, les extrémités de l'autre barre anti-dévers étant fixées sur les faces extérieures des bras oscillants. Les barres ont alors des longueurs différentes.

Dans un deuxième mode de réalisation, les extrémités d'une même barre anti-dévers sont fixées respectivement sur la face intérieure d'un premier bras oscillant et sur la face extérieure du deuxième bras oscillant, les extrémités de l'autre barre anti-dévers étant fixées respectivement sur la face extérieure du premier bras oscillant et sur la face intérieure du deuxième bras oscillant. Les barres ont alors sensiblement la même longueur.

Avantageusement, chaque bras est pourvu au niveau de sa face intérieure d'un orifice afin de permettre le passage de l'extrémité de la barre qui doit être fixée sur sa face intérieure. Cet agencement permet d'améliorer la fixation de l'extrémité de la barre sur le bras correspondant.

Avantageusement, les barres anti-dévers sont reliées entre elles par au moins un élément amortissant. Une telle liaison est possible grâce à la position rapprochée des barres obtenue par l'emplacement de la fixation des extrémités des barres sur les faces intérieure et extérieure de chaque bras oscillant. Un tel élément amortissant permet de réduire les vibrations des barres et ainsi de limiter le bruit généré par de telles vibrations.

Ainsi, dans le premier mode de réalisation, les deux barres, de longueur différente, ne vibrent pas à la même fréquence, et leur liaison permet d'atténuer leurs vibrations, et notamment d'éviter les pics vibratoires. Dans le deuxième mode de réalisation, les deux barres présentent la même longueur, et par conséquent les mêmes modes propres de vibration, mais présentent des déformées modales (des formes de déformation) différentes. De même que pour le précédent mode de réalisation, la liaison de ces barres permet d'atténuer leurs vibrations.

Avantageusement, l'essieu comprend une traverse recouvrant les deux barres anti-dévers dont les extrémités sont fixées sur les faces intérieures des bras oscillants.

Un deuxième objet de l'invention concerne un procédé d'assemblage de deux barres anti-dévers sur les bras oscillants d'un essieu souple, l'essieu comprenant deux bras oscillants longitudinaux articulés chacun à un support de roue et dont une extrémité est articulée à la carrosserie du véhicule, dans lequel chaque bras oscillant présente une face intérieure faisant face à l'autre bras oscillant et une face extérieure opposée dirigée vers l'extérieur du véhicule, caractérisé en ce qu'il comprend les étapes successives consistant à :
(i) fixer les deux extrémités d'une même barre anti-dévers, ou l'une des extrémités de chaque barre anti-dévers, sur les faces intérieures opposées des deux bras oscillants,
(ii) enfiler les extrémités de l'autre barre anti-dévers, ou l'autre extrémité de chaque barre anti-dévers, à travers des orifices prévus dans les bras oscillants, et fixer ces extrémités sur les faces extérieures des bras oscillants ainsi traversés.

Un tel procédé permet d'automatiser l'assemblage des barres anti-dévers sur les bras oscillants.

Avantageusement, l'essieu comprend en outre l'étape de fixation d'une traverse sur les bras oscillants, après l'étape (i) ou après l'étape (ii), la traverse recouvrant les barres anti-dévers.

L'invention est maintenant décrite en référence aux dessins annexés, non limitatifs, dans lesquels :
- la figure 1 représente partiellement une vue de dessus d'un essieu selon un premier mode de réalisation de l'invention, les bras oscillants étant représentés en coupe ;
- la figure 2 est une vue similaire à la figure 1 d'un essieu selon un deuxième mode de réalisation de l'invention.

Les axes X et Y représentent respectivement les directions longitudinale et transversale du véhicule, l'axe Z représentant la direction verticale.

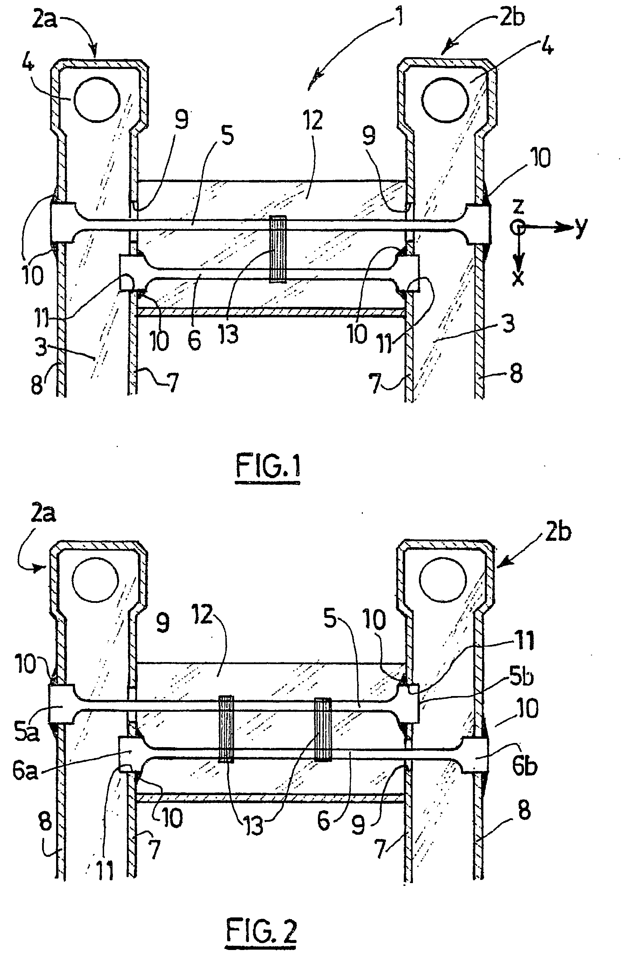

Un premier mode de réalisation d'un essieu souple 1 selon l'invention est décrit en référence à la figure 1. De manière classique, l'essieu 1 comprend deux bras oscillants longitudinaux 2a, 2b. Chaque bras 2a, 2b est relié de manière connue par son extrémité 3 dirigée vers l'arrière du véhicule à un support de roue (non représenté). L'autre extrémité 4 des bras 2a, 2b, dirigée vers l'avant du véhicule, est articulée à la carrosserie du véhicule (non représentée).

L'essieu est pourvu de deux barres anti-dévers 5 et 6 dont les extrémités sont reliées aux deux bras oscillants 2a, 2b et qui s'étendent sensiblement perpendiculairement à ces derniers. Les barres 5, 6 sont fixées sur chaque bras 2a, 2b entre le support de roue et l'extrémité 4 reliée à la carrosserie. Elles s'étendent de préférence dans un même plan horizontal XY.

Chaque bras 2a, 2b est formé d'un profilé fermé creux, dont deux faces intérieure 7 et extérieure 8 s'étendant sensiblement verticalement et longitudinalement. Les faces intérieures 7 des deux bras sont situées en vis-à-vis, tandis que les faces extérieures 8, opposées, sont dirigées vers l'extérieur du véhicule.

Dans cet exemple, une première barre anti-dévers 5 est fixée par ses extrémités aux faces extérieures 8 des bras 2a, 2b. A cet effet, chaque bras 2a, 2b est pourvu d'un orifice 9 le traversant de part en part, d'axe transversal, suffisamment grand pour permettre le passage de la première barre 5. Les axes des orifices 9 de chaque bras sont confondus. La première barre 5 est réalisée suffisamment longue pour saillir légèrement de la face extérieure 8 de chaque bras. Elle est soudée sur toute sa périphérie à la face extérieure 8 par un cordon de soudure 10.

La deuxième barre anti-dévers 6 est fixée par ses extrémités aux faces intérieures 7 des bras 2a, 2b. Pour une fixation plus robuste, un orifice 11 est également réalisé sur la face intérieure 7 de chacun des bras permettant le passage de l'extrémité de la barre 6. Les axes des orifices 11 de chaque bras sont confondus. Un cordon de soudure 10 soude la barre sur toute sa périphérie à la face intérieure 7 du bras.

Les soudures sont de préférence réalisées sur l'extérieur des bras 2a, 2b, de sorte qu'elles peuvent être effectuées par un automate.

L'assemblage de ce mode de réalisation est effectué de la manière suivante. La deuxième barre 6 est d'abord soudée sur la face intérieure 7 de chacun des bras 2a, 2b, ses extrémités étant insérées dans les orifices 11 des faces intérieures. Puis, la première barre 5 est enfilée à travers les orifices traversants 9 des bras 2a, 2b et est ensuite soudée sur la face extérieure 8 des deux bras.

Le deuxième mode de réalisation représenté sur la figure 2, se distingue du premier par la longueur des barres anti-dévers et la face des bras sur laquelle elles sont fixée. Les mêmes références ont par conséquent été utilisées pour désigner les mêmes éléments.

La première barre anti-dévers 5 est fixée par l'une de ses extrémités 5a à la face extérieure 8 du premier bras 2a et par son autre extrémité 5b à la face intérieure 7 du deuxième bras 2b. A cet effet, le premier bras 2a présente un orifice traversant 9 pour le passage de l'extrémité 5a de la barre, tandis que le deuxième bras 2b présente un orifice 11 sur sa face intérieure 7 pour l'insertion de l'extrémité 5b de la barre. Les axes des orifices 9 et 11 de chaque bras sont alors confondus.

De manière similaire, la deuxième barre anti-dévers 6 est fixée par l'une de ses extrémités 6a à la face intérieure 7 du premier bras 2a et par son autre extrémité 6b à la face extérieure 8 du deuxième bras 2b. Le deuxième bras 2b présente un orifice traversant 9 pour le passage de l'extrémité 6b de la barre, tandis que le premier bras 2a présente un orifice 11 sur sa face intérieure 7 pour l'insertion de l'extrémité 6a de la barre. L'axe de cet orifice 11 étant confondu avec l'orifice correspondant 9 de l'autre bras.

L'assemblage de ce mode de réalisation est effectué de la manière suivante. En premier, l'extrémité 5b de la première barre 5 est soudée sur la face intérieure 7 du deuxième bras 2b et l'extrémité 6a de la deuxième barre 6 est soudée sur la face intérieure 7 du premier bras 2a. Les deux bras 2a, 2b sont ensuite rapprochés l'un de l'autre, leur barre respective 6, 5 traversant l'autre bras 2b, 2a par les orifices 9, puis, les extrémités 5a et 6b des première et deuxième barres respectivement sont soudées sur la face extérieure 8 de chacun des bras. Ce mode de réalisation présente l'avantage d'une faible mise en contrainte des barres anti-dévers l'une par rapport à l'autre, les barres subissant un cycle symétrique.

L'essieu peut comprendre en outre une traverse 12, élastiquement déformable en torsion et rigide en torsion, rigidement reliée par ses extrémités aux deux bras 2a, 2b, et qui vient recouvrir les deux barres anti-dévers 5 et 6. La traverse présente dans les exemples un profil ouvert couché, dont l'ouverture est dirigée vers l'avant du véhicule. Seule la moitié inférieure de cette traverse est visible sur les figures. Bien entendu, d'autres formes de traverses peuvent être utilisées. Cette traverse est soudée sur les faces intérieures des bras, après le soudage des barres anti-dévers sur les faces intérieures des bras (mais indifféremment avant ou après le soudage des barres sur les faces extérieures des bras).

Dans chacun des modes de réalisation, chacune des barres anti-dévers peut être fixée indifféremment du côté de l'articulation à la carrosserie ou du côté du support de roue.

Dans l'exemple représenté figure 1, les deux barres 5 et 6 sont reliées entre elles par un élément amortisseur 13 situé sensiblement dans un plan médian XZ de l'essieu. Cet élément permet d'atténuer les vibrations des barres ainsi qu'on l'a décrit plus haut. Il peut s'agir une bague de caoutchouc précontrainte entre les deux barres anti-dévers ou de toute autre liaison adaptée. Eventuellement, plusieurs de ces éléments peuvent être utilisés pour relier les barres, tel que représenté dans l'exemple visible sur la figure 2.

Dans les exemples, les barres anti-dévers sont de section cylindrique et présentent des extrémités de plus grande dimension pour faciliter leur soudage. On pourrait également envisager des barres de section asymétrique, par exemple ovale, orientées dans des directions distinctes de manière à présenter des modes de vibration différents qui peuvent être atténués par une liaison amortissante entre les barres.

## Revendications

1. Essieu souple pour véhicule automobile (1) comprenant deux bras oscillants longitudinaux (2a, 2b) articulés chacun à un support de roue et dont une extrémité (4) est articulée à la carrosserie du véhicule, dans lequel chaque bras oscillant (2a, 2b) présente une face intérieure (7) faisant face à l'autre bras oscillant et une face extérieure (8) opposée dirigée vers l'extérieur du véhicule, **caractérisé en ce qu'**il est pourvu de deux barres anti-dévers (5, 6) s'étendant sensiblement perpendiculairement aux deux bras oscillants et les reliant, et **en ce que** la face intérieure (7) de chaque bras oscillant est fixée à l'extrémité de l'une des barres (5, 6) tandis que sa face extérieure (8) est fixée à l'extrémité de l'autre barre, chaque bras (2a, 2b) étant pourvu d'un orifice traversant (9) afin de permettre le passage de la barre dont l'extrémité doit être fixée sur sa face extérieure.

2. Essieu souple selon la revendication 1, **caractérisé en ce que** les extrémités d'une même barre anti-dévers (5) sont fixées sur les faces intérieures (7) des bras oscillants, les extrémités de l'autre barre anti-dévers (6) étant fixées sur les faces extérieures (8) des bras oscillants.

3. Essieu selon la revendication 1, **caractérisé en ce que** les extrémités (6a, 6b) d'une même barre anti-dévers (6) sont fixées respectivement sur la face intérieure (7) d'un premier bras oscillant (2a) et sur la face extérieure (8) du deuxième bras oscillant (2b), les extrémités (5a, 5b) de l'autre barre anti-dévers (5) étant fixées respectivement sur la face extérieure (8) du premier bras oscillant (2a) et sur la face intérieure (7) du deuxième bras oscillant (2b).

4. Essieu selon l'une des revendications 1 à 3, **caractérisé en ce que** chaque bras (2a, 2b) est pourvu au niveau de sa face intérieure (7) d'un orifice (11) afin de permettre le passage l'extrémité de la barre qui doit être fixée sur cette face intérieure.

5. Essieu selon l'une des revendications 1 à 4, **caractérisé en ce que** les barres anti-dévers (5, 6) sont reliées entre elles par au moins un élément amortissant (13).

6. Essieu selon la revendication 5, **caractérisé en ce que** l'élément amortissant (13) est une bague en caoutchouc.

7. Essieu selon l'une des revendications 1 à 6, **caractérisé en ce qu'**il comprend une traverse (12) recouvrant les deux barres anti-dévers (5, 6) et dont les extrémités sont fixées sur les faces intérieures (7) des bras oscillants (2a, 2b).

8. Procédé d'assemblage de deux barres anti-dévers (5, 6) sur les bras oscillants (2a, 2b) d'un essieu souple, l'essieu comprenant deux bras oscillants longitudinaux articulés chacun à un support de roue et dont une extrémité est articulée à la carrosserie du véhicule, dans lequel chaque bras oscillant (2a, 2b) présente une face intérieure (7) faisant face à l'autre bras oscillant et une face extérieure (8) opposée dirigée vers l'extérieur du véhicule, **caractérisé en ce qu'**il comprend les étapes successives consistant à :
(i) fixer les deux extrémités d'une même barre anti-dévers (6), ou l'une des extrémités (5b, 6a) de chaque barre anti-dévers, sur les faces intérieures (7) opposées des deux bras oscillants,
(ii) enfiler les extrémités de l'autre barre anti-dévers (5), ou l'autre extrémité (5a, 6b) de chaque barre anti-dévers, à travers des orifices (9) prévus dans les bras oscillants, et fixer ces extrémités sur les faces extérieures (8) des bras oscillants ainsi traversés.

9. Procédé d'assemblage selon la revendication 8, **caractérisé en ce qu'**il comprend en outre l'étape de fixation d'une traverse (12) sur les bras oscillants, après l'étape (i) ou après l'étape (ii), la traverse (12) recouvrant les barres anti-dévers (5, 6).

## Claims

1. Flexible axle (1) for a motor vehicle, comprising two longitudinal swing arms (2a, 2b) each pivotally mounted on a wheel support and of which one end (4) is pivotally mounted on the vehicle body, wherein each swing arm (2a, 2b) has an inner face (7) facing the other swing arm and an opposite outer face (8) directed towards the outside of the vehicle, **characterized in that** it is provided with two stabilizer bars (5, 6) extending substantially perpendicularly to the two swing arms and connecting them, and **in that** the inner face (7) of each swing arm is fastened to the end of one of the bars (5, 6) whereas its outer face (8) is fastened to the end of the other bar, each arm (2a, 2b) being provided with a through orifice (9) so as to allow the passage of the bar whose end is to be fastened to its outer face.

2. Flexible axle according to Claim 1, **characterized in that** the ends of one and the same stabilizer bar (5) are fastened to the inner faces (7) of the swing arms, the ends of the other stabilizer bar (6) being fastened to the outer faces (8) of the swing arms.

3. Flexible axle according to Claim 1, **characterized in that** the ends (6a, 6b) of one and the same stabilizer bar (6) are respectively fastened to the inner face (7) of a first swing arm (2a) and to the outer face (8) of the second swing arm (2b), the ends (5a, 5b) of the other stabiliser bar (5) being respectively fastened to the outer face (8) of the first swing arm (2a) and to the inner face (7) of the second swing arm (2b).

4. Flexible axle according to one of Claims 1 to 3, **characterized in that** each arm (2a, 2b) is provided with an orifice (11) in its inner face (7) so as to allow the passage of the end of the bar which is to be fastened to this inner face.

5. Flexible axle according to one of Claims 1 to 4, **characterized in that** the stabilizer bars (5, 6) are connected to one another by at least one damping element (13).

6. Flexible axle according to Claim 5, **characterized in that** the damping element (13) is a rubber ring.

7. Flexible axle according to one of Claims 1 to 6, **characterized in that** it comprises a crossmember (12) which covers the two stabilizer bars (5, 6) and whose ends are fastened to the inner faces (7) of the swing arm (2a, 2b).

8. Method of assembling two stabilizer bars (5, 6) on the swing arms (2a, 2b) of a flexible axle, the axle comprising two longitudinal swing arms each pivotably mounted on a wheel support and of which one end is pivotably mounted on the vehicle body, wherein each swing arm (2a, 2b) has an inner face (7) facing the other swing arm and an opposite outer face (8) directed towards the outside of the vehicle, **characterized in that** it comprises the following successive steps consisting in:
(i) fastening the two ends of one and the same stabilizer bar (6), or one of the ends (5b, 6a) of each stabilizer bar, to the opposite inner faces (7) of the two swing arms,
(ii) inserting the ends of the other stabilizer bar (5), or the other end (5a, 6b) of each stabiliser bar, through the orifices (9) provided in the swing arms, and fastening these ends to the outer faces (8) of the swing arms thus traversed.

9. Assembly method according to Claim 8, **characterized in that** it additionally comprises the step of fastening a crossmember (12) to the swing arms, after step (i) or after step (ii), the crossmember (12) covering the stabilizer bars (5, 6).

## Patentansprüche

1. Flexible Achse für ein Kraftfahrzeug (1), die zwei Längsschwingarme (2a, 2b) aufweist, die je an einem Radträger angelenkt sind und von denen ein Ende (4) an die Karosserie des Fahrzeugs angelenkt ist, wobei jeder Schwingarm (2a, 2b) eine Innenseite (7), die dem anderen Schwingarm gegenüberliegt, und eine entgegengesetzte Außenseite (8) aufweist, die zur Außenseite des Fahrzeugs gerichtet ist, **dadurch gekennzeichnet, dass** sie mit zwei Wanksteifigkeitsstangen (5, 6) versehen ist, die sich im Wesentlichen lotrecht zu den zwei Schwingarmen erstrecken und sie verbinden, und dass die Innenseite (7) jedes Schwingarms am Ende einer der Stangen (5, 6) befestigt ist, während seine Außenseite (8) am Ende der anderen Stange befestigt ist, wobei jeder Arm (2a, 2b) mit einer Durchgangsöffnung (9) versehen ist, um den Durchgang der Stange zu erlauben, deren Ende an seiner Außenseite befestigt werden soll.

2. Flexible Achse nach Anspruch 1, **dadurch gekennzeichnet, dass** die Enden der gleichen Wanksteifigkeitsstange (5) an den Innenseiten (7) der Schwingarme befestigt sind, während die Enden der anderen Wanksteifigkeitsstange (6) an den Außenseiten (8) der Schwingarme befestigt sind.

3. Achse nach Anspruch 1, **dadurch gekennzeichnet, dass** die Enden (6a, 6b) der gleichen Wanksteifigkeitsstange (6) an der Innenseite (7) eines ersten Schwingarms (2a) bzw. an der Außenseite (8) des zweiten Schwingarms (2b) befestigt sind, während die Enden (5a, 5b) der anderen Wanksteifigkeitsstange (5) an der Außenseite (8) des ersten Schwingarms (2a) bzw. an der Innenseite (7) des zweiten Schwingarms (2b) befestigt sind.

4. Achse nach einem der Ansprüche 1 bis 3, **dadurch gekennzeichnet, dass** jeder Arm (2a, 2b) in Höhe seiner Innenseite (7) mit einer Öffnung (11) versehen ist, um den Durchgang des Endes der Stange zu erlauben, das auf dieser Innenseite befestigt werden soll.

5. Achse nach einem der Ansprüche 1 bis 4, **dadurch gekennzeichnet, dass** die Wanksteifigkeitsstangen (5, 6) miteinander durch mindestens ein Dämpfungselement (13) verbunden sind.

6. Achse nach Anspruch 5, **dadurch gekennzeichnet, dass** das Dämpfungselement (13) ein Ring aus Kautschuk ist.

7. Achse nach einem der Ansprüche 1 bis 6, **dadurch gekennzeichnet, dass** sie einen Querträger (12) aufweist, der die zwei Wanksteifigkeitsstangen (5, 6) bedeckt und dessen Enden an den Innenseiten (7) der Schwingarme (2a, 2b) befestigt sind.

8. Verfahren zur Montage von zwei Wanksteifigkeitsstangen (5, 6) auf den zwei Schwingarmen (2a, 2b) einer flexiblen Achse, wobei die Achse zwei Längsschwingarme aufweist, die je an einen Radträger angelenkt sind und von denen ein Ende an die Karosserie des Fahrzeugs angelenkt ist, bei dem jeder Schwingarm (2a, 2b) eine Innenseite (7), die dem anderen Schwingarm gegenüberliegt, und eine entgegengesetzte Außenseite (8) aufweist, die zur Außenseite des Fahrzeugs gerichtet ist, **dadurch gekennzeichnet, dass** es die folgenden Schritte aufweist, die darin bestehen:
(i) die zwei Enden der gleichen Wanksteifigkeitsstange (6) oder eines der Enden (5b, 6a) jeder Wanksteifigkeitsstange an den entgegengesetzten Innenseiten (7) der zwei Schwingarme zu befestigen,
(ii) die Enden der anderen Wanksteifigkeitsstange (5) oder das andere Ende (5a, 6b) jeder Wanksteifigkeitsstange durch in den Schwingarmen vorgesehene Öffnungen (9) hindurch zu schieben und diese Enden an den Außenseiten (8) der so durchquerten Schwingarme zu befestigen.

9. Montageverfahren nach Anspruch 8, **dadurch gekennzeichnet, dass** es außerdem den Schritt der Befestigung eines Querträgers (12) auf den Schwingarmen nach dem Schritt (i) oder nach dem Schritt (ii) aufweist, wobei der Querträger (12) die Wanksteifigkeitsstangen (5, 6) bedeckt.
